# EUROPÄISCHE PATENTANMELDUNG

(11) **EP 1 134 489 A2**
(43) Veröffentlichungstag der Anmeldung: **19.09.2001**
(21) Anmeldenummer: 01105840.1
(22) Anmeldetag: 09.03.2001
(51) Int. Cl.: F21V 14/08

(54) **Scheinwerfer für Fahrzeuge und Steuervorrichtung**

(30) Priorität: 16.03.2000 DE 10012923
(71) Anmelder: Hella KG Hueck & Co., 59552 Lippstadt (DE)
(72) Erfinder: Börnchen, Thomas, 96052 Bamberg (DE); Giepen, Bernd, 59597 Erwitte (DE); Heitbreder, Volker, 59494 Soest (DE); Lachmayer, Roland, Dr., 59581 Warstein (DE)

(57) **Zusammenfassung**

Die Erfindung betrifft einen Scheinwerfer (1) für Fahrzeuge mit einem Reflektor (2) und mit einer in einem zentralen Bereich des Reflektors angeordneten Lichtquelle (3), wobei der Lichtquelle (3) zum einen ein feststehendes Blendenelement (6,6') und zum anderen ein bewegliches Blendenelement (7) zugeordnet ist und wobei das bewegliche Blendenelement (7) mittels einer Blendenstelleinrichtung (8) aus einer Ausgangsstellung in eine einen Sektor des Reflektors (2) abschattenden Betriebsstellung verstellbar angeordnet ist, wobei die Blendenstelleinrichtung (8) in Abstrahlrichtung hinter dem Reflektor (2) angeordnet ist und dass das bewegliche Blendenelement (7) in der Ausgangsstellung unmittelbar an einem Anschlag (14) eines die Lichtquelle (3) tragenden Halteteils (9) anliegt.

## Beschreibung

Die Erfindung betrifft einen Scheinwerfer für Fahrzeuge mit einem Reflektor und mit einer in einem zentralen Bereich des Reflektors angeordneten Lichtquelle, wobei der Lichtquelle zum einen ein feststehendes Blendenelement und zum anderen ein bewegliches Blendenelement zugeordnet ist und wobei das bewegliche Blendenelement mittels einer Blendenstelleinrichtung aus einer Ausgangsstellung in eine einen Sektor des Reflektors abschattenden Betriebsstellung verstellbar angeordnet ist.

Die Erfindung betrifft ferner Steuervorrichtung für einen Scheinwerfer eines Fahrzeugs mit einem Reflektor, einer in einem zentralen Bereich des Reflektors angeordneten Lichtquelle, einem feststehenden Blendenelement zum Erzeugen einer ersten Helldunkelgrenze und einem beweglichen Blendenelement zum Erzeugen einer zweiten Helldunkelgrenze, wobei das bewegliche Blendenelement mittels einer Blendenstelleinrichtung betätigbar ist.

Aus der DE 197 29 826 A1 ist ein Scheinwerfer für Fahrzeuge bekannt, der einen Reflektor und eine in einem zentralen Bereich des Reflektors angeordnete Lichtquelle aufweist zur Bildung einer Abblendlichtverteilung. Der Reflektor ist mit einer Leuchtweitenstelleinrichtung gekoppelt und derart von dieser um eine horizontale Achse verschwenkbar ausgebildet, dass der Scheinwerfer zu einem nebengeordneten Fernlichtscheinwerfer in der Fernlicht-Betriebsstellung zugeschaltet werden kann. Die hierzu erforderliche Steuervorrichtung sieht keine Modifizierung der Abblendlichtverteilung vor.

Aus der DE 40 02 576 A1 ist ein Scheinwerfer für Fahrzeuge mit einem Reflektor und einer Lichtquelle bekannt, wobei der Lichtquelle eine axial verschiebliche oder um eine eine senkrecht zu der optischen Achse angeordneten horizontale Achse verschwenkbaren Blende zur Umschaltung zwischen der Fernlicht- und der Abblendlichtfunktion vorgesehen ist. Die bekannte Blende ermöglicht lediglich die Einstellung einer einzigen Helldunkelgrenze für die Abblendlichtfunktion.

Aus der DE 43 07 110 A1 ist ein Scheinwerfer für Fahrzeuge mit einem Reflektor und einer Lichtquelle bekannt, wobei der Lichtquelle ein bewegliches Blendenelement zugeordnet ist zur Einstellung des Scheinwerfers zum Betrieb im Rechts- und Linksverkehr. Das bewegliche Blendenelement ist um eine optische Achse schwenkbar ausgebildet. Die bekannte Druckschrift enthält keine Angaben über die die Kopplung des beweglichen Blendenelementes zu einer Blendenstelleinrichtung bzw. zu einem Halteteil der Lichtquelle.

Aus der DE-OS 2 320 908 ist ein Scheinwerfer für Fahrzeuge mit einem Reflektor und einer Lichtquelle bekannt, wobei der Lichtquelle zum einen ein feststehendes Blendenelement und zum anderen ein bewegliches Blendenelement zugeordnet ist. Dem beweglichen Blendenelement ist eine Blendenstelleinrichtung zugeordnet, mittels derer das bewegliche Blendenelement aus einer ersten Betriebsstellung in eine einen Sektor des Reflektors abschattenden zweiten Betriebsstellung bringbar ist, so dass der Scheinwerfer zwei Abblendlichtverteilungen erzeugen kann. Die Blendenstelleinrichtung ist in Abstrahlrichtung vor der Lichtquelle angeordnet. Nachteilig hieran ist, dass die Blendenstelleinrichtung aufgrund der Nähe zu der Lichtquelle einer thermischen Belastung ausgesetzt ist. Ferner ergibt sich durch die Quererstreckung der Blendenstelleinrichtung eine unerwünschte Schattenbildung im Strahlengang des Scheinwerfers. Nachteilig ist ferner an dem Scheinwerfer, dass eine relativ lange Toleranzkette von der Lichtquelle über die Blendenstelleinrichtung zu dem beweglichen Blendenelement gegeben ist, so dass die Einstellung der jeweiligen Helldunkelgrenze relativ ungenau ist.

Aufgabe der vorliegenden Erfindung ist es daher, einen Scheinwerfer für Fahrzeuge derart weiterzubilden, dass die Genauigkeit bei der Einstellung von unterschiedlichen Lichtverteilungen, insbesondere der Helldunkelgrenze, mittels eines beweglichen Blendenelementes verbessert wird.

Zur Lösung dieser Aufgabe ist der erfindungsgemäße Scheinwerfer in Verbindung mit dem Oberbegriff des Patentanspruchs 1 dadurch gekennzeichnet, dass die Blendenstelleinrichtung in Abstrahlrichtung hinter dem Reflektor angeordnet ist und dass das bewegliche Blendenelement in der Ausgangsstellung unmittelbar an einem Anschlag eines die Lichtquelle tragenden Halteteils anliegt.

Der erfindungsgemäße Scheinwerfer ermöglicht die Erhöhung der Genauigkeit bei der Einstellung einer oder mehrerer Lichtverteilungen dadurch, dass eine relativ kurze Toleranzkette von dem beweglichen Blendenelement zu dem die Lichtquelle tragenden Halteteil gegeben ist. Dadurch, dass das bewegliche Blendenelement in einer Betriebsstellung unmittelbar an einem Anschlag des Halteteils anliegt, wirken sich Toleranzen der Blendenstelleinrichtung bzw. dessen Halterung nicht ungünstig auf die Lage der Helldunkelgrenze aus. Darüber hinaus wird vorteilhaft durch die Lage der Blendenstelleinrichtung in Abstrahlrichtung hinter dem Reflektor eine abschattende Wirkung derselben vermieden. Ferner ist die Blendenstelleinrichtung aufgrund der Entfernung zu der Lichtquelle nicht einer unerwünschten thermischen Belastung ausgesetzt.

Nach einer besonderen Ausführungsform des beweglichen Blendenelementes weist dieses neben einem Abschattabschnitt einen Querausleger auf, so dass die Blendenstelleinrichtung im radialen Abstand versetzt zu der Lichtquelle angeordnet sein kann. Hierdurch wird eine außermittige Lage der Blendenstelleinrichtung geschaffen, die Bauraum für ein zentral hinter dem Reflektor angeordnetes Steuergerät für die Lichtquelle ermöglicht.

Nach einer Weiterbildung der Erfindung weist das bewegliche Blendenelement einen u-förmigen Anlageabschnitt auf, der den Anschlag des Halteteils umgreift und in einer Betriebsstellung mit einem Scheitelteil unmittelbar an dem Anschlag anliegt. An den u-förmigen Anlageabschnitt schließt sich der Querausleger und der Abschattabschnitt an. Diese Ausführungsform eignet sich insbesondere für rechts von der Fahrzeuglängsachse angeordnete Scheinwerfer. Nach einer alternativen Ausführungsform des Blendenelementes weist dieses einen s-förmigen Anlageabschnitt auf, bei dem sich an das Scheitelteil ein sich in waagerechter Richtung erstreckender Abschnitt anschließt, so dass der Abschattabschnitt in Abstrahlrichtung stets links von der Lichtquelle angeordnet ist. Die Blendenstelleinrichtung kann jeweils auf einer zu der Fahrzeuglängsachse zugekehrten Seite des Halteteils arretiert sein, so dass der Bauraum hinter dem Scheinwerfer vorteilhaft genutzt werden kann.

Nach einer Weiterbildung der Erfindung ist die Lichtquelle als Gasentladungslampe ausgebildet, wobei das feststehende Blendenelement als eine auf die Gasentladungslampe aufgebrachte lichtundurchlässige Beschichtung ausgebildet ist. Die Beschichtung ist derart bereichsweise um die optische Achse angeordnet, dass eine asymmetrische Lichtverteilung mit einem 15-Grad-Anstieg ermöglicht wird. Zur Erzeugung dieser Lichtverteilung wird das bewegliche Blendenelement aus der Ausgangslage bewegt in eine durch die Beschichtung bereits abgeschirmte Lage, so dass allein die Beschichtung für das Erzeugen der Helldunkelgrenze verantwortlich ist. Dadurch, dass die Beschichtung auf dem Körper der Gasentladungslampe aufgebracht ist, ist in dieser ersten Betriebsstellung die Lage der Helldunkelgrenze präzise einstellbar. In der zweiten Betriebsstellung bewirkt die Blendenstelleinrichtung ein Abschatten eines sich anschließenden Reflektorsektors, so dass eine symmetrische Lichtverteilung erzeugt wird. Durch die Anlage des Blendenelementes unmittelbar an den Anschlag des Halteteils ist auch bei dieser zweiten Betriebsstellung eine präzise Einstellung der Helldunkelgrenze gegeben.

Aufgabe der vorliegenden Erfindung ist es ferner, eine Steuervorrichtung für einen Scheinwerfer anzugeben, so dass auf einfache Weise eine bedarfsgerechte Einstellung mehrerer Lichtverteilungen bei Gewährleistung einer genauen Helldunkelgrenze ermöglicht wird.

Zur Lösung dieser Aufgabe ist die erfindungsgemäße Steuervorrichtung in Verbindung mit dem Oberbegriff des Patentanspruchs 6, dadurch gekennzeichnet, dass eine Steuereinrichtung vorgesehen ist, die in Abhängigkeit eines Parameters, wie z.B. von der Fahrgeschwindigkeit des Fahrzeugs, ein Steuersignal an die Blendenstelleinrichtung und/oder eine auf die Relativlage der Lichtquelle zum Reflektor einwirkende Leuchtweiteneinrichtung abgibt, derart, dass in einem ersten Geschwindigkeitsintervall eine symmetrische Lichtverteilung mit einer Helldunkelgrenze unterhalb der horizontalen Längsmittelebene, in einem zweiten Geschwindigkeitsintervall eine asymmetrische Lichtverteilung mit einem von dem Nullpunkt ausgehenden Anstieg und in einem dritten Geschwindigkeitsintervall eine symmetrische Lichtverteilung mit einer Helldunkelgrenze oberhalb der horizontalen Längsmittelebene erzeugt wird.

Vorteilhaft ermöglicht die erfindungsgemäße Steuervorrichtung ein selbsttätiges Umschalten mehrerer Lichtverteilungen in Abhängigkeit von der Fahrgeschwindigkeit des Fahrzeuges. Beispielsweise kann die Steuervorrichtung dazu genutzt werden, eine symmetrische Abblendlichtverteilung zu erzeugen, deren Helldunkelgrenze unterhalb der horizontalen Längsmittelebene liegt. Bei Anwendung dieser Lichtverteilung innerhalb von beleuchteten Straßen kann eine Blendung von Fußgängern vermieden werden. Bei Erhöhung der Fahrgeschwindigkeit unter Überschreiten eines ersten Schwellwertes kann durch Verstellen des beweglichen Blendenelementes eine asymmetrische Lichtverteilung mit einem 15-Grad-Anstieg erzeugt werden (Abblendlicht). Bei weiterer Erhöhung der Geschwindigkeit über einen zweiten Schwellwert wird das bewegliche Blendenelement in die Ausgangsstellung zurückbewegt und gleichzeitig eine Leuchtweiteneinrichtung betätigt, derart, dass eine symmetrische Lichtverteilung mit einer Helldunkelgrenze oberhalb der horizontalen Längsmittelebene erzeugt wird. Durch das Vorsehen der waagerechten Helldunkelgrenze kann eine Blendung des vorausfahrenden Verkehrs, insbesondere auf der Autobahn, vermieden werden. Vorteilhaft wird durch die in Abhängigkeit von der Fahrgeschwindigkeit abgestimmte Betätigung der Blendenstelleinrichtung einerseits und der Leuchtweiteneinrichtung andererseits ein multifunktionaler Scheinwerfer geschaffen, der selbsttätig eine Adaption der Beleuchtung an unterschiedliche Umgebungsbedingungen ermöglicht.

Nach einer vorteilhaften Ausführungsform der Erfindung ist in der Steuervorrichtung eine Hystereseschaltung vorgesehen, so dass das Umschalten der Blendenstelleinrichtung und der Leuchtweiteneinrichtung von der einen in die andere Richtung und umgekehrt um einen Geschwindigkeitsbetrag versetzt zueinander ausgeführt wird. Auf diese Weise kann ein unerwünschtes Hin- und Herschalten der Einrichtung bei Beschleunigung und Verzögerung in dem Umschalt-Geschwindigkeitsbereich wirksam verhindert werden.

Eine Ausführungsform der Erfindung wird nachfolgend anhand der Zeichnungen näher erläutert.

Es zeigen:
- Figur 1: ein schematischer Querschnitt durch eine Lichtquelle mit einem beweglichen und feststehenden Blendenelement eines Scheinwerfers,
- Figur 2: eine schematische Darstellung eines Scheinwerfers,
- Figur 3: eine perspektivische Ansicht des Scheinwerfers schräg von vorne in einer Ausgangsstellung des beweglichen Blendenelements,
- Figur 4: eine schematische Darstellung von vier unterschiedlichen Lichtverteilungen,
- Figur 5: ein Zeitdiagramm für eine Ansteuerung einer Blendenstelleinrichtung und einer Leuchtweiteneinrichtung,
- Figur 6: ein Blockschaltbild einer Steuervorrichtung für den Scheinwerfer,
- Figur 7: eine perspektivische Rückansicht eines Scheinwerfers, der sich auf einer rechten Seite des Fahrzeuges befindet, in einer Ausgangsstellung des beweglichen Blendenelements und
- Figur 8: eine Rückansicht eines Scheinwerfers, der sich auf einer linken Seite des Fahrzeuges befindet, in einer Ausgangsstellung des beweglichen Blendenelements.

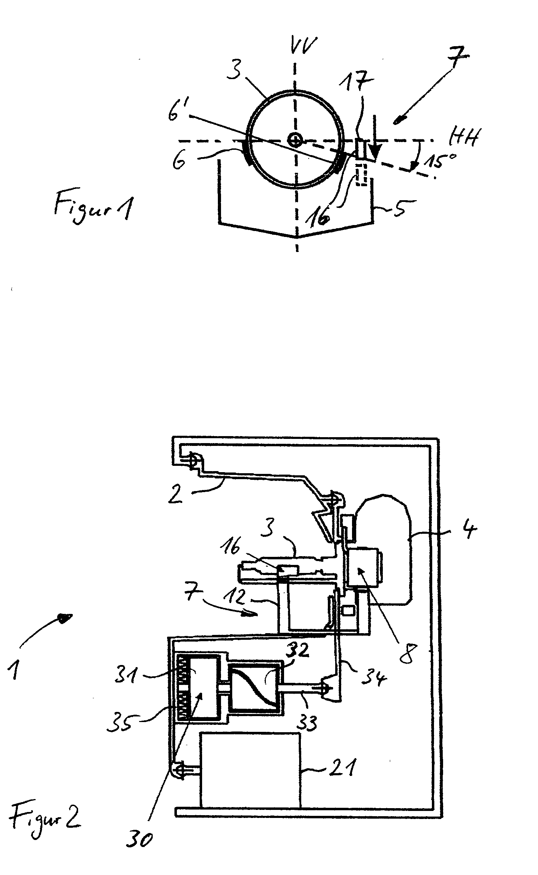

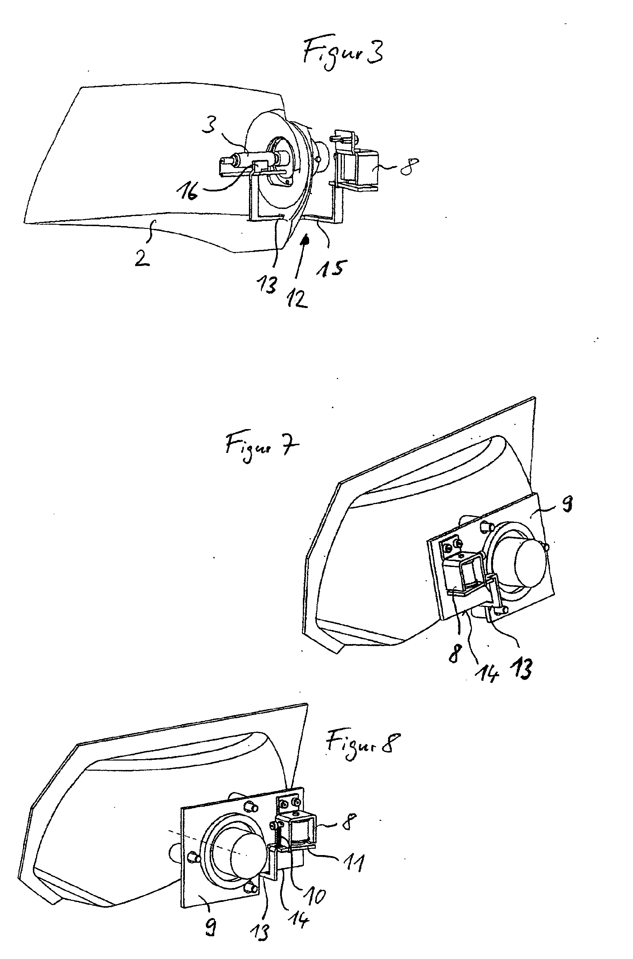

In Figur 2 ist ein Scheinwerfer 1 für Fahrzeuge dargestellt, der im Wesentlichen einen Reflektor 2 und eine im zentralen Bereich des Reflektors 2 angeordnete Lichtquelle 3 aufweist. Die Lichtquelle 3 ist als Gasentladungslampe ausgebildet. Zu diesem Zweck ist auf der Rückseite des Reflektors 2 ein Steuergerät (Zündgerät) 4 angeordnet zur elektrischen Ansteuerung der Gasentladungslampe 3.

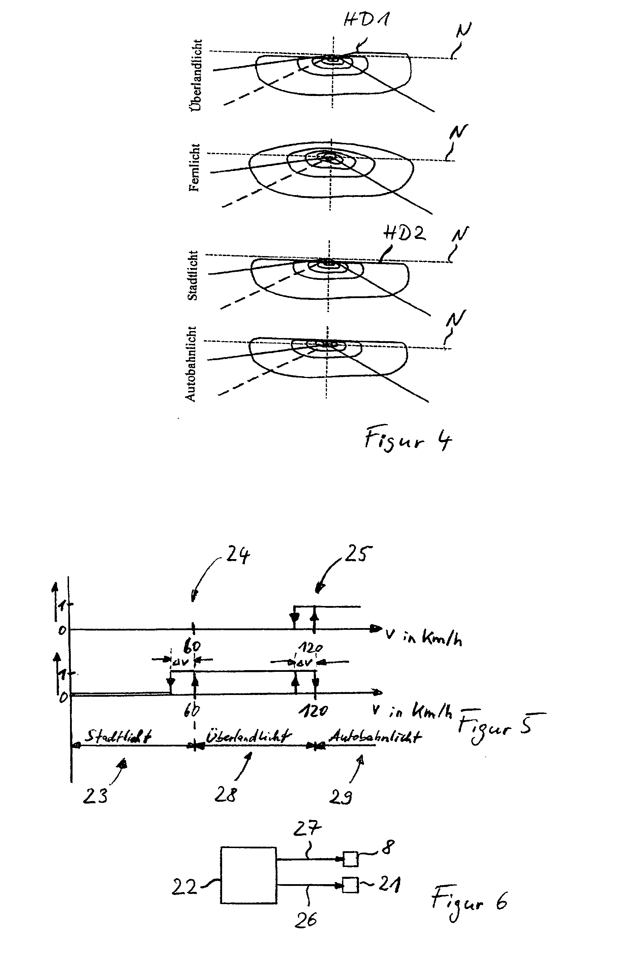

Wie aus Figur 1 ersichtlich ist, ist unterhalb der Gasentladungslampe 3 in üblicher Weise eine Kalotte 5 zur Abschirmung nach unten hin angeordnet. In Abstimmung mit einem äußeren waagerechten Rand der Kalotte 5 ist auf dem Körper der Gasentladungslampe 3 zu beiden Seiten einer vertikalen Längsmittelebene W eine streifenförmige Beschichtung 6, 6' aufgebracht. Die Beschichtungen 6, 6' sind als eine nicht transparente Lackierung aufgebracht, wobei ein oberer Rand der ersten Beschichtung 6 mit einer horizontalen Längsmittelebene zusammenläuft und ein oberer Rand der Beschichtung 6' mit der horizontalen Längsmittelebene HH einen 15-Grad Winkel bildet. Die Beschichtungen 6, 6' bilden ein feststehendes Blendenelement, das im Zusammenwirken mit dem Reflektor 2 eine Überlandlichtverteilung gemäß Figur 4 erzeugt. Durch die konturenscharfe Ausbildung der Beschichtungen 6, 6' auf der Oberfläche des Körpers der Gasentladungslampe 3 wird eine präzise und zeitstabile Anordnung einer Helldunkelgrenze HD1 ermöglicht.

In dieser ersten Betriebsstellung des Scheinwerfers 1 befindet sich ein bewegliches Blendenelement 7 in einem durch die Beschichtung 6' abgeschatteten Bereich (gestrichelte Lage in Figur 1). Zur Verstellung des beweglichen Blendenelementes 7 in diese in radialem Abstand zu der Beschichtung 6' befindlichen Lage ist eine Blendenstelleinrichtung 8 vorgesehen, die auf einer Rückseite des Reflektors 2 angeordnet ist. Die Blendenstelleinrichtung 8 besteht im Wesentlichen aus einem strombeaufschlagbaren Magneten, insbesondere aus einem Klappankermagneten, der an einem starr mit der Fassung der Gasentladungslampe 3 verbundenen Halteteil 9 befestigt ist. Der Magnet ist entgegen einer vorgespannten Feder 10 in eine Stellung bewegbar, in der das bewegliche Blendenelement 7 "im Schatten" der Beschichtung 6' angeordnet ist (gestrichelte Lage in Figur 1). Beim Betätigen der Blendenstelleinrichtung 8 erfolgt ein Verschwenken einer Schwenkplatte 11 um eine zu der optischen Achse parallel angeordneten Schwenkachse. An die Schwenkplatte 11 schließt sich ein u-förmiger Anlageabschnitt 12 des beweglichen Blendenelementes 7 an, der mit einem Scheitelteil 13 in einer Ausgangsstellung des beweglichen Blendenelementes 7 unmittelbar an einem Anschlag (Anschlagkante) 14 des Halteteils 9 anliegt. In diese Ausgangsstellung des beweglichen Blendenelementes 7 wird das Scheitelteil 13 ausschließlich durch die Federkraft der Feder 10 gegen den Anschlag 14 gedrückt. Hierdurch ergibt sich eine definierte Lage eines sich an den u-förmigen Anlageabschnitt 12 anschließenden Abschattabschnitts 16 des beweglichen Blendenelementes 7. Der Abschattabschnitt 16 erstreckt sich parallel zu der optischen Achse und weist eine obere Kante 17 auf, die in der horizontalen Längsmittelebene HH verläuft. Der Abschattabschnitt 16 erstreckt sich im Wesentlichen vertikal von der horizontalen Längsmittelebene HH bis nach unten in einen Bereich, der von dem feststehenden Blendenelement 6' abgeschattet wird.

In dieser Ausgangsstellung des beweglichen Blendenelementes 7, die zugleich die zweite Betriebsstellung des Scheinwerfers bildet, wird eine symmetrische Lichtverteilung entsprechend der Stadtlichtfunktion gemäß Figur 4 erzeugt. Dadurch, dass das in unmittelbarer Nähe zum Abschattabschnitt 16 befindliche Scheitelteil 13 an dem Anschlag 14 anliegt, wird stets eine genaue Lage einer Helldunkelgrenze HD2 unterhalb einer Nulllinie N ermöglicht.

Das bewegliche Blendenelement 7 weist einen Querausleger 15 auf, der im Wesentlichen parallel zu der horizontalen Längsmittelebene HH angeordnet ist und eine außermittige Lagerung bzw. Befestigung der Blendenstelleinrichtung 8 an dem Halteteil 9 ermöglicht. Vorzugsweise ist die Blendenstelleinrichtung 8 auf einer zur Fahrzeuglängsachse hin zugekehrten Seite des Scheinwerfers 1 angeordnet. Damit der Abschattabschnitt 16 stets auf der gleichen Seite bezüglich der vertikalen Längsmittelebene W der Gasentladungslampe 3 angeordnet ist, ist bei einem rechten Scheinwerfer 1 gemäß Figur 7 ein nicht dargestellter langer Querausleger angeordnet, der wesentlich länger ausgebildet ist, als der Querausleger 15 für den linken Scheinwerfer gemäß Figur 8.

Durch das Betätigen der Blendenstelleinrichtung 8 kann der Scheinwerfer 1 von einer ersten Betriebsstellung (Stadtlichtfunktion), in der das bewegliche Blendenelement 7 einen Sektor des Reflektors 2 abdeckt, in eine zweite Betriebsstellung (Überlandlichtfunktion) verstellt werden. Im Zusammenwirken mit einer Leuchtweiteneinrichtung 21, die den Reflektor 2 um einen vorgegebenen Winkel um eine horizontale Drehachse verschwenken kann, kann eine dritte Betriebsstellung des Scheinwerfers 1 geschaffen werden, in der die Helldunkelgrenze oberhalb einer horizontalen Nullinie N verläuft (Autobahnlichtfunktion).

Die Einstellung dieser drei Betriebsstellungen erfolgt nach einem Aspekt der Erfindung in Abhängigkeit von einer Fahrgeschwindigkeit v des Fahrzeugs. Zu diesem Zweck ist eine Steuereinrichtung 22 vorgesehen, die in Abhängigkeit von der Fahrgeschwindigkeit v die Blendenstelleinrichtung 8 und/oder die Leuchtweiteneinrichtung 21 ansteuert.

Wie aus Figur 5 zu ersehen ist, befindet sich der Scheinwerfer 1 in einem ersten Geschwindigkeitsabschnitt 23 des Fahrzeugs in der ersten Betriebsstellung, in der das bewegliche Blendenelement 7 sich in der Ausgangsstellung befindet (Stadtlichtfunktion). Durch die symmetrische Lichtverteilung unterhalb der horizontalen Längsmittelebene HH kann eine Blendung von Fußgängern oder dergleichen verhindert werden. Bei Überschreiten eines ersten Schwellwertes 24 (60 km/h) wird die Blendenstelleinrichtung 8 betätigt, so dass das bewegliche Blendenelement 7 in die gemäß Figur 1 gestrichelte Position verstellt wird. Es liegt somit die asymmetrische Überlandlichtfunktion vor. Wird ein zweiter Schwellwert 25, beispielsweise bei 120 km/h überschritten, erfolgt die Zurückschaltung des beweglichen Blendenelementes 7 in die Ausgangsstellung sowie gleichzeitig eine Betätigung der Leuchtweiteneinrichtung 21 derart, dass die Helldunkellinie entsprechend der Autobahnlichtfunktion in Figur 4 oberhalb der horizontalen Nullinie N angehoben wird. In dieser dritten Betriebsstellung erfolgt aufgrund des Wegfalls des 15-Grad Anstiegs keine Blendung des vorausfahrenden Verkehrs. Zur Verstellung der Leuchtweiteneinrichtung 21 und der Blendenstelleinrichtung 8 werden jeweils von der Steuereinrichtung 22 ein Leuchtweitensteuersignal 26 bzw. ein Blendensteuersignal 27 erzeugt. Bei Verringerung der Fahrgeschwindigkeit v erfolgt die Umschaltung in umgekehrter Richtung.

Die Überlandlichtfunktion erfolgt in einem zweiten Geschwindigkeitsabschnitt 28, während die Autobahnlichtfunktion in einem dritten Geschwindigkeitsabschnitt 29 vorhanden ist.

Damit eine Geschwindigkeitsänderung in einem Übergangsbereich zwischen den Geschwindigkeitsabschnitten 23, 28, 29 nicht zu einem unerwünschten Hin- und Herschalten zwischen den Lichtfunktionen führt, weist die Steuereinrichtung 22 eine Hystereseschaltung auf, beispielsweise einen Schmitt-Trigger, der ein um einen vorgegebenen Geschwindigkeitsbetrag Δv versetzten Schwellwert in Abhängigkeit von dem Vorliegen einer Zu- oder Abnahme der Fahrgeschwindigkeit einstellt. Der Endwert der Geschwindigkeitsabschnitte 23, 28, 29 differiert in Abhängigkeit von der Zu- oder Abnahme der Geschwindigkeit v.

Zur Verstellung des Scheinwerfers 1 von einer dieser Abblendlichtfunktionen in eine Fernlichtfunktion gemäß Figur 4 und umgekehrt ist zusätzlich eine Stelleinrichtung 30 vorgesehen mit einem Elektromotor 31, einem Getriebe 32 zur Umwandlung der Rotationsbewegung des Motors 31 in eine Linearbewegung eines sich anschließenden Stellstiftes 33, der eine starr mit der Lichtquelle 3 verbundene Schwenkplatte 34 betätigt. Hierdurch kann unabhängig von der Lage des beweglichen Blendenelementes 7 und der Einstellung der Leuchtweiteneinrichtung 21 die Lichtquelle 3 nach unten verschwenkt werden, so dass eine Fernlichtfunktion gemäß Figur 4 erzeugt wird. Eine Rückstellfeder 35 bewirkt, dass bei Ausfall des Motors 31 bzw. bei Nichtbeaufschlagen des Motors 31 die Lichtquelle 3 in die Ausgangslage zurückbewegt wird (Abblendlichtfunktion). Mittels eines Steuersignals wird die Stelleinrichtung 30 ebenfalls von der Steuereinrichtung 22 angesteuert.

## Patentansprüche

1. Scheinwerfer für Fahrzeuge mit einem Reflektor und mit einer in einem zentralen Bereich des Reflektors angeordneten Lichtquelle, wobei der Lichtquelle zum einen ein feststehendes Blendenelement und zum anderen ein bewegliches Blendenelement zugeordnet ist und wobei das bewegliche Blendenelement mittels einer Blendenstelleinrichtung aus einer Ausgangsstellung in eine einen Sektor des Reflektors abschattenden Betriebsstellung verstellbar angeordnet ist, **dadurch gekennzeichnet, dass** die Blendenstelleinrichtung (8) in Abstrahlrichtung hinter dem Reflektor (2) angeordnet ist und dass das bewegliche Blendenelement (7) in der Ausgangsstellung unmittelbar an einem Anschlag (14) eines die Lichtquelle (3) tragenden Halteteils (9) anliegt.

2. Scheinwerfer nach Anspruch 1, **dadurch gekennzeichnet, dass** das bewegliche Blendenelement (7) einen Querausleger (15) aufweist, derart, dass die Blendenstelleinrichtung (8) in einem radialen Abstand zu der optischen Achse des Reflektors (2) angeordnet ist.

3. Scheinwerfer nach Anspruch 1 oder 2, **dadurch gekennzeichnet, dass** das bewegliche Blendelement (7) einen u-förmigen Anlageabschnitt (12) aufweist, der in der Ausgangsstellung des beweglichen Blendenelementes (7) mit einem Scheitelteil (13) unmittelbar an dem Anschlag (14) anliegt.

4. Scheinwerfer nach einem der Ansprüche 1 bis 3, **dadurch gekennzeichnet, dass** die Blendenstelleinrichtung (8) auf einer Rückseite des Halteteils (9) befestigt ist.

5. Scheinwerfer nach einem der Ansprüche 1 bis 4, **dadurch gekennzeichnet, dass** die Blendenstelleinrichtung (8) einen strombeaufschlagbaren Magneten aufweist, der zur Verstellung des beweglichen Blendenelementes (7) von der eine zweite Betriebsstellung des Scheinwerfers (1) bildenden Ausgangsstellung in die erste Betriebsstellung entgegen einer Federkraft mit elektrischem Strom beaufschlagt wird.

6. Scheinwerfer nach einem der Ansprüche 1 bis 5, **dadurch gekennzeichnet, dass** die Lichtquelle (3) als eine Gasentladungslampe ausgebildet ist und dass das feststehende Blendenelement als eine auf die Gasentladungslampe (3) aufgebrachte lichtundurchlässige Beschichtung (6, 6') ausgebildet ist zur Erzeugung einer Helldunkelgrenze in der ersten Betriebsstellung.

7. Steuervorrichtung für einen Scheinwerfer eines Fahrzeugs mit
- einem Reflektor,
- einer in einem zentralen Bereich des Reflektors angeordneten Lichtquelle,
- einem feststehenden Blendenelement zum Erzeugen einer ersten Helldunkelgrenze und
- einem beweglichen Blendenelement zum Erzeugen einer zweiten Helldunkelgrenze, wobei das bewegliche Blendenelement mittels einer Blendenstelleinrichtung betätigbar ist,
**dadurch gekennzeichnet, dass** eine Steuereinrichtung (22) vorgesehen ist, die in Abhängigkeit eines Parameters, wie z.B. von der Fahrgeschwindigkeit des Fahrzeugs, ein Steuersignal (26, 27) an die Blendenstelleinrichtung (8) und/oder eine auf die Relativlage der Lichtquelle (3) zum Reflektor (2) einwirkende Leuchtweiteneinrichtung (21) abgibt, derart, dass in einem ersten Geschwindigkeitsintervall (23) eine symmetrische Lichtverteilung mit einer Helldunkelgrenze unterhalb einer horizontalen Nullinie (N), in einem zweiten Geschwindigkeitsintervall (28) eine asymmetrische Lichtverteilung mit einem von dem Nullpunkt ausgehenden Anstieg und in einem dritten Geschwindigkeitsintervall (29) eine symmetrische Lichtverteilung mit einer Helldunkelgrenze oberhalb der horizontalen Nullinie (N) erzeugt wird.

8. Steuervorrichtung nach Anspruch 6, **dadurch gekennzeichnet, dass** die Steuereinrichtung (22) ein Blendensteuersignal (27) zur Betätigung der Blendenstelleinrichtung (8) erzeugt, sofern die Fahrgeschwindigkeit einen zu dem Endwert des ersten Geschwindigkeitsintervalls (23) korrespondierenden ersten Schwellwert (24) und einen zu dem Endwert des zweiten Geschwindigkeitsintervalls (28) korrespondierenden zweiten Schwellwerts (25) überschreitet bzw. unterschreitet.

9. Steuervorrichtung nach Anspruch 7 oder 8, **dadurch gekennzeichnet, dass** die Steuereinrichtung (22) ein Leuchtweitensteuersignal (26) zur Betätigung der Leuchtweitenstelleinrichtung (21) erzeugt, sofern die Fahrgeschwindigkeit einen zu dem Endwert des zweiten Geschwindigkeitsintervalls (28) korrespondierenden zweiten Schwellwert (25) überschreitet bzw. unterschreitet.

10. Steuervorrichtung nach einem der Ansprüche 7 bis 8, **dadurch gekennzeichnet, dass** die Steuereinrichtung (22) eine Hystereseschaltung aufweist, derart, dass der erste und/oder zweite Schwellwert (24, 25) in Abhängigkeit von dem Vorliegen einer Zu- oder Abnahme der Fahrgeschwindigkeit um einen vorgegebenen Betrag (Δv) differiert.

11. Steuervorrichtung nach einem der Ansprüche 7 bis 9, **dadurch gekennzeichnet, dass** eine Stelleinrichtung (30) vorgesehen ist, die mit einem Steuersignal der Steuereinrichtung (22) beaufschlagbar ist, derart, dass eine starr mit der Lichtquelle (3) verbundene Schwenkplatte (34) mittels eines Stellstiftes (33) um eine horizontale Achse verschwenkbar ist zur Bildung einer Fernlichtfunktion.
